**Europäisches Patentamt**

**European Patent Office**

**Office européen des brevets**

(19)

(11) Publication number : **0 513 026 B1**

# (12) EUROPEAN PATENT SPECIFICATION

(45) Date of publication of patent specification :
18.10.95 Bulletin 95/42

(51) Int. Cl.⁶ : **F16H 59/10, F16H 59/70**

(21) Application number : **91901887.9**

(22) Date of filing : **21.12.90**

(86) International application number :
**PCT/GB90/02014**

(87) International publication number :
**WO 91/11638 08.08.91 Gazette 91/18**

(54) **GEAR POSITION SENSOR.**

(30) Priority : **25.01.90 GB 9001745**

(43) Date of publication of application :
**19.11.92 Bulletin 92/47**

(45) Publication of the grant of the patent :
**18.10.95 Bulletin 95/42**

(84) Designated Contracting States :
**DE ES FR IT**

(56) References cited :
**DE-C- 2 646 393**
**GB-A- 2 040 372**
**GB-A- 2 171 802**
**GB-A- 2 183 753**
**US-A- 3 866 488**

(73) Proprietor : **AUTOMOTIVE PRODUCTS PLC**
**Tachbrook Road**
**Leamington Spa Warwickshire CV31 3ER (GB)**

(72) Inventor : **PARSONS, David**
**2 Malthouse Lane,**
**Kenilworth**
**Warwickshire CV8 1A (GB)**
Inventor : **YOUNG, Alastair, John**
**39 Roundshill,**
**Kenilworth**
**Warwickshire CV8 1D (GB)**

(74) Representative : **Adkins, Michael et al**
**Withers & Rogers**
**4 Dyer's Buildings**
**Holborn**
**London EC1N 2JT (GB)**

## Description

This invention concerns a gear position sensor.

Typically a motor vehicle transmission may be of a type comprising a change-speed gearbox having a plurality of gear ratios which are mutually exclusively engageable so that at any instant only one of the ratios can be engaged, a movable member which can be moved in first and second opposite directions and also third and fourth opposite directions which are transverse to said first and second directions such that said member can be moved to any desired one of a plurality of pre-determined positions each corresponding to the engagement of a respective one of said gear ratios, and the movement of said member to a said pre-determined position causing the engagement of the corresponding gear ratio.

US-A-3866488 discloses a gear position sensor to indicate that one of a plurality of gear ratios has been engaged in a change speed transmission. The sensor comprises a sensing component and a co-operable component which is movable relative to the sensing component. The co-operation between the components enabling the sensing component to provide a signal to indicate that a particular ratio has been engaged.

A gear position sensor is also described in GB-A-2171 802. However the sensor requires the use of a multiplicity of magnets for operating a number or Hall Effect transducers and is of a complex nature.

DE-C-2646393, which corresponds to the preamble of claim 1 relates to a gear position sensing system in which two sensors are used each of which travels over a distinct surface portion of a single member. One sensor provides an altered signal as a result of axial movement of the member the surface being symmetrical about the axis of the member. The other sensor provides an altered signal as a result of rotary movement of the member, the surface being uniform axially. Both sensors are required to enable gear position to be sensed.

An object of the present invention is to provide an improved gear position sensor which will enable the engagement of ratios to be sensed.

According to the invention there is provided a gear position sensor to indicate that one of a plurality of gear ratios has been engaged in a change-speed transmission, the sensor comprising a sensing component and a co-operable component one of which can be moved relative to the other in a first direction and a second direction transverse to the first direction into any one of a plurality of pre-determined attitudes each of which corresponds to one of the ratios, the cooperation between the components enabling the sensing component to provide a signal to indicate that a particular ratio has been engaged, the co-operable component defining a cam-like surface comprising a plurality of surface portions which co-operate with a part of the sensing component; characterised in that a single sensing component provides a plurality of signals corresponding to all the respective ratios by co-operation with said surface portions which are interconnected by a path which extends in said first direction, said surface portions extending from the sides of said path so that said part of the sensing component engages said path when relative movement occurs between said components in the first direction whereby said single sensing component is able to sense engagement of all of the gear ratios.

The use of a cam surface enables a positive signal to be provided without the use of multiple magnets and the attendant constructional complexities.

The sensing component may comprise a single transducer or like device arranged to provide a plurality of said signals corresponding to the respective selectable ratios.

The use of a single transducer or like device provides a simpler arrangement than that in GB-A-2 171 802 where several Hall-effect transducers are necessary.

The aforesaid cam-like surface may comprise a plurality of surface portions which co-operate with the other component, or the transducer or like device, in the respective attitudes.

A plurality of the aforesaid surface portions may be spaced apart in the first direction of movement and a plurality of the said surface portions may be spaced apart in the second direction.

The first and second directions of movement may comprise respective linear and rotational movements.

The aforesaid surface portions are preferably interconnected by a common surface which may extend in the first direction. The common surface may be in a form of a narrow linear path preferably parallel with the said first direction of movement.

Once the cam form has been designed it is relatively straightforward to produce and assembly of the gear sensor is then easier than that in GB-A-2 171 802 where many tiny magnets have to be fixed in position every time the sensor is assembled.

The other of said components or the transducer or like device is preferably a linear transducer and may include a member such as an operating finger arranged to follow said common surface when relative movement occurs between the components in said first direction.

Where the aforesaid surface portions are spaced apart in said second direction, rotary movement in opposite senses from a mean position may permit co-operation between those surface portions and the other component or transducer or like device. Preferably, where the aforesaid common surface extends in said first direction, it lies at said mean position.

The aforesaid mean position may correspond to a neutral position of the transmission.

Conveniently, the co-operable component e.g., the component defining the cam-like surface, is the component which is movable into the said attitudes and the sensing component, in such a case, is preferably held stationary.

Conveniently, the sensing component can occupy a position on the transmission which is normally occupied by a reversing lamp switch.

Preferably the sensing component provides a signal which causes a releasable clutch to engage after said ratio is engaged but prior to operation of detent means in the change speed transmission which maintains the engaged condition.

Preferably the sensing component provides a signal which causes a releasable clutch to disengage after said ratio has been disengaged.

Normally, one of the engagement ratios will be a reverse ratio and the sensing component will provide an operating signal when reverse ratio is selected which is used to cause a reversing indicator to operate. The operating signal which causes the reversing indicator to operate may be of a level different from the levels of signals provided by the sensing component when other ratios are selected.

One of the surface portions of the cam which operates with the other component or the transducer or like device in an attitude which corresponds to reverse ratio may be arranged to create movement of part of the sensing component which will cause the sensing component to provide said different level of signal.

Preferably the amount by which the said part of the sensing component is moved when selecting reverse ratio is greater than that by which it is moved by other of the said surface portions when selecting other ratios.

The movable component may be movably mounted on a selector element which moves over a given distance to select the ratios. In such a case the movable component may be permitted to move with said selector element for a reduced distance less than said given distance. Preferably the selector element moves relative to the movable component up to said given distance after the movable component has moved through said reduced distance.

The selector element may be movable relative to said movable component against a resilient bias. In that case the resilient bias may be provided by a suitable spring.

The movable component may be formed with a bore which slidably receives the selector element to permit the selector element to move relative to the movable component. Conveniently, the spring may be arranged between a surface of the movable component in which the bore is formed and a surface of the selector element or a member fast therewith.

A gear position sensor in accordance with the invention will now be described by way of example with reference to the accompanying drawings in which:-

Fig.1 is a cross-section through part of a change speed transmission of a vehicle and showing diagrammatically part of an engine and clutch,

Fig.2 is a cross-section taken through a cam in Fig.1 generally on the line II-II in Fig.1 and showing a gear selector arm,

Figs.3 and 4 are further cross-sections through the cam on lines III-III and IV-IV in Fig.1,

Fig.5 is a diagram of voltage output from a linear transducer at various positions of the cam,

Fig.6 is a view similar to Fig.1 showing part of the transmission having its casing modified to re-position a sensor, and

Fig.7 is a diagram similar to that in Fig.5 showing voltage output resulting from use of the arrangement shown in Fig.6.

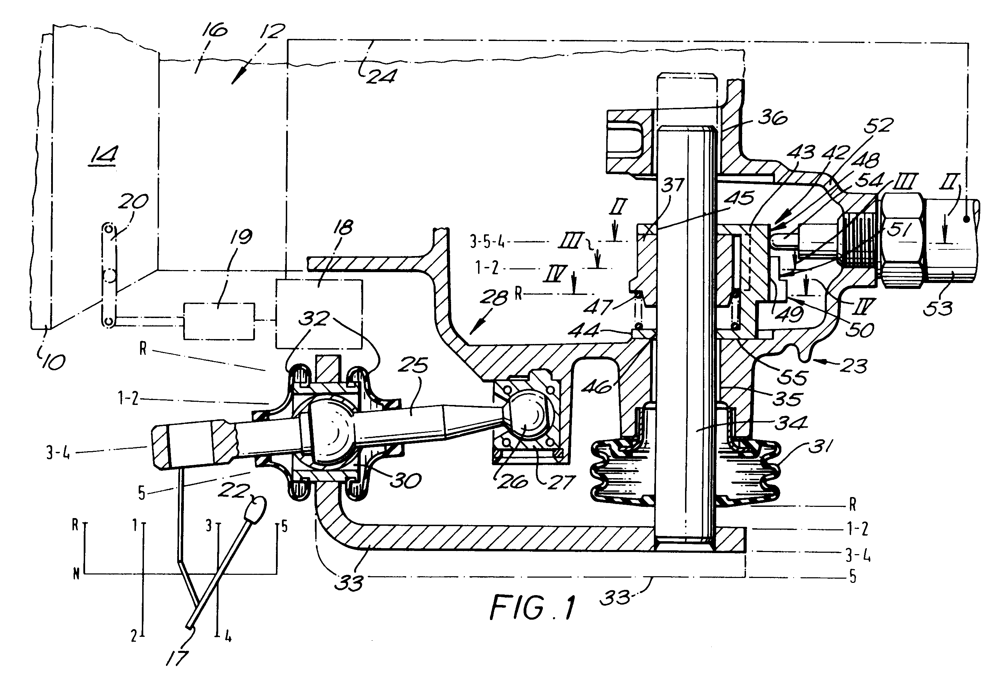

With reference to Fig.1 of the accompanying drawings, an internal combustion engine 10 includes a semi-automatic transmission 12 for a motor vehicle (not shown). The transmission comprises a clutch 14, for example a diaphragm spring clutch, and a change speed gearbox 16 for supplying the rotary drive to one or more road wheels of the vehicle. The gearbox 16 comprises a plurality of mutually exclusively selectable gear ratios any desired one of which is selectable (in the course of a driver making a gear change) by suitable pre-determined manual movement of a gear shift lever 17 to disengage or de-select the said ratio currently engaged and then select or engage any desired said gear ratio. A clutch control for automatically engaging and disengaging the clutch comprises an electronic control 18 and a fluid control 19. The electronic control comprises computer means. The clutch is disengaged and re-engaged using a release lever or fork 20 and interacting in known manner with the clutch. The rate and degree of engagement of disengagement of the clutch at any instant is controlled by the electronic control 18 and fluid control 19. The gear selection lever 17 may be of a kind described in our co-pending application No.PCT/GB89/01199 and is not described in detail herein. The gear lever is sensitive to manual force applied to a knob 22 indicating a wish by the driver to change gear. The electronic control 18 operates in response to tilting of the knob 22 and provides an output clutch disengage signal causing the fluid control 19 to disengage the clutch 14. Thereafter, engagement of any desired gear ratio is observed by a gear position sensor generally indicated at 23 which provides a gear engagement completed signal to the electronic control 18 along a line 24. In response, the electronic control 18 provides an output re-engage signal to the fluid control 19 so as automatically to re-engage the clutch 14.

Fig.1 includes a typical shift pattern for the gear lever 17 in a gearbox having five forward ratios comprising first, second, third fourth and fifth ratios and one reverse ratio. Any desired one of such ratios can be engaged by moving the selection lever 17 to the positions 1, 2, 3, 4, 5 or R respectively in the gear shift pattern. When the gearbox is in neutral, the gear shift lever adopts position along path N.

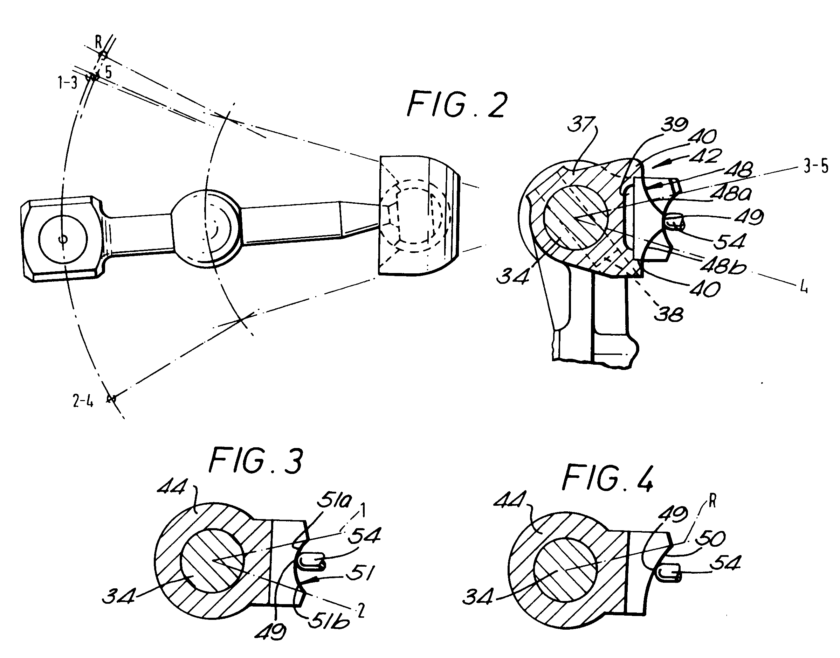

The selection lever 17 is mechanically connected to one end of a selector arm 25 having its other end formed as a ball 26 pivotally mounted within a bearing 27 carried by a stationary casing part 28 of the gearbox 16. The arm 25 is pivoted intermediate its ends in a universal bearing 30 provided with gaiters 32 to prevent ingress of foreign matter into the bearing. The arm 25 moves into positions 5, 3-4, 1-2 and R corresponding to the ratios selected by lever 17. The bearing 30 is carried by a lever 33 which is rotatably fast with a selector shaft 34 slidable and rotatable within bores 35, 36 defined by the casing part 28. The shaft 34 (constituting the aforesaid selector element) is arranged to operate selector forks (not shown) in the gearbox 16 for engaging selected ratios. A gaiter 31 extends between the selector shaft 34 and casing part 28. The arm 25 is movable into positions which enable ratios 5, 3-4, 1-2 and R to be selected as shown in Figs.1 and 2. Movement of arm 25 is transmitted to lever 33 so as to move the lever into corresponding positions 5, 3-4, 1-2 and R as shown in Fig.1.

The selector shaft 34 is drivably connected to a sleeve 37 by means of a drive pin 38. The sleeve 37 is formed with an outer groove 39 having parallel side walls 40 which slidably receive a cam member 42 constituting one of the aforesaid co-operable components. The cam member has upper and lower flanges 43, 44 formed with respective coaxial bores 45, 46 through which the selector shaft 34 slidably passes. A spring 47 extends between the sleeve 37 and flange 44 so as normally to bias the flange 43 downwardly against the upper end of the sleeve 37.

The cam member 42 provides an upper set of cam surfaces 48 as viewed in Fig.1 comprising two cam surfaces 48a, 48b extending from a central vertical path 49, a lower cam surface 50 extending each side of the path 49 and an intermediate set 51 comprising cam surfaces 51a, 51b extending one each side of the path 49. The path 49 constitutes the aforesaid common surface.

The transmission casing part 28 is formed with a mounting 52 for a linear transducer 53 constituting the other of the aforesaid co-operable components. The transducer 53 has an operating finger 54 which is normally biased against the cam member 42. The linear transducer 53 is connected to the electronic control 18 through the line 24.

The upper, lower and intermediate cam surfaces 48, 50 and 51 adopt positions level with the finger 54 when ratios 3-5-4, 1-2 and R are respectively selected as indicated in Fig.1-4.

When the selector lever 17 is positioned in the neutral path N, the operating finger 54 lies on the path 49 of the cam member 42, the path occupying the aforesaid mean position.

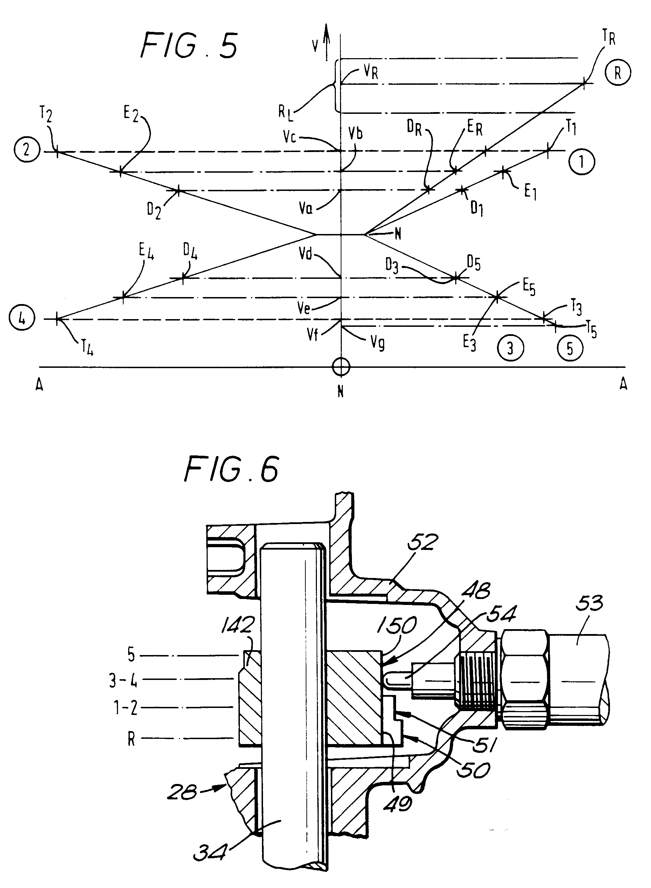

To select reverse ratio, the selector lever 17 is moved to the extreme left as viewed in Fig.1 along the neutral path N thereby pivoting the selector arm 25 about its right hand end into its upper position in Figs.1 and 2. Such movement causes the lever 33, selector shaft 34 and cam member 42 to move upwardly in the aforesaid first direction relative to the linear transducer 53. The operating finger 54 then aligns on path 49 with the lower cam surface 50 and movement of the selector lever 17 towards the position R causes the selector arm 25 to pivot towards the position R in Fig.2 thereby rotating the selector shaft 34 and causing the operating finger 54 to engage the lower cam surface 50. Rotary movement of the selector shaft 34 constitutes movement in the aforesaid second direction. The output from the linear transducer then provides an appropriate signal to the electronic control 18 and will be described below with reference to Fig.5.

To select ratio 1, the selector lever 17 is moved back into neutral, moved to the right along the neutral path N and then into the position 1. That movement causes the selector arm 25 to bring the cam member 42 back to the neutral position and to move the selector shaft 34 downwardly. In that way, the path 49 rides along the operating finger 54 before the selector shaft 34 is rotated further to cause the finger to engage cam surface 51a of the intermediate set of surfaces.

To select ratio 2, the gear selector lever 17 is moved across the neutral path N and then into position 2. Such movement causes the selector shaft to rotate bringing cam surface 51b into contact with the finger 54.

To select ratio 3, the gear selector lever 17 is moved back into neutral so that the finger 54 engages path 49. The selector lever 17 is then moved to the right along the neutral path N and then into position 3. Such movement rotates the shaft 34 causing the surface 51b to disengage finger 54, subsequently moves the shaft downwardly causing the path 49 to ride along the finger 54 and finally rotates the shaft 34 bringing surface 48a into contact with finger 54.

To select ratio 4, gear selector lever 17 is moved across neutral and into position 4. Such movement causes the selector shaft 34 to rotate bringing the cam surface 48b into contact with finger 54.

In ratios 3 and 4, the flange 44 of the cam member engages or is positioned closely adjacent a surface 55 of the casing part 28.

To select ratio 5, the gear selection lever 17 is moved back into neutral so that the finger 54 engages the path 49. The selector lever 17 is then moved to the right along the neutral path N and then into position 5. Such movement rotates shaft 34 causing the surface 48b to disengage finger 54, and moves shaft 34 downwardly until the shaft 34 reaches its lowest position. As the flange 44 of the cam member 42 cannot move beyond the surface 55, the downward movement of the shaft 34 causes the spring 47 to compress. Movement of the selector lever 17 into position 5 then rotates shaft 34 bringing surface 48a into contact with finger 54. Therefore it will be seen that in ratio 5 finger 54 engages the same surface 48a as in ratio 3. However the angular movement of shaft 34 when selecting ratio 3 is slightly less than that when selecting ratio 5. Also, the angular movement of shaft 34 between neutral and the positions where ratios 2 and 4 are selected is greater than that between neutral and the positions where ratios 1, 3, 5 and R are selected. The lengths of the sets of cam surfaces 48, 49 and 51 in the rotational directions of the shaft are selected to accommodate such differences in angular movement.

In Fig.5 outputs from the transducer 23 can be seen for the selected ratios.

In Fig.5 the references 1, 2, 3, 4, 5, R and N correspond to the shift positions shown in Fig.1, the voltage output from the transducer 53 is indicated at V and the rotational position of the selector shaft 34 each side of neutral position N is indicated at A.

As the gear selector lever 17 moves out of the neutral path N to select a ratio (e.g. ratio 1) with the clutch disengaged, the ratio will engage at point $E_1$ before the selector lever moves fully home in position $T_1$ where a gear selector detent (not shown) within the change speed transmission becomes operative to hold the transmission in ratio 1. As soon as $E_1$ is reached the clutch re-engages in response to a signal Vb from the transducer 53. On reaching position $T_1$ a voltage Vc is produced to indicate detent engagement. As the selector lever 17 is moved back towards the neutral path N, the ratio will disengage at a point $D_1$ where a signal Vb is produced by the transducer which causes disengagement of the clutch to take place. A similar sequence occurs in the remaining ratios as apparent from the Fig.5 and the table below:-

| RATIO REQUIRED | RATIO DISENGAGED | RATIO ENGAGED | DETENT ENGAGED | TRANSDUCER OUTPUT VOLTAGE |
|---|---|---|---|---|
| 1 | $D_1$ | | | Va |
| | | $E_1$ | | Vb |
| | | | $T_1$ | Vc |
| 2 | $D_2$ | | | Va |
| | | $E_2$ | | Vb |
| | | | $T_2$ | Vc |
| 3 | $D_3$ | | | Vd |
| | | $E_3$ | | Ve |
| | | | $T_3$ | Vf |
| 4 | $D_4$ | | | Vd |
| | | $E_4$ | | Ve |
| | | | $T_4$ | Vf |
| 5 | $D_5$ | | | Vd |
| | | $E_5$ | | Ve |
| | | | $T_5$ | Vg |
| R | $D_R$ | | | Va |
| | | $E_R$ | | Vb |
| | | | $T_R$ | Vr |

When selecting reverse ratio R, the cam surface 50 causes the operating finger 54 to be moved a greater distance than when it is moved by the other cam surfaces. Such movement enables a greater output voltage signal to be obtained as the gear selector lever 17 moves towards its fully home position $T_R$.

During such movement, the output voltage enters a range RL which is higher than voltage Vc and sufficient to enable the output voltage to operate, e.g., a power transistor or relay in the electronic control 18 so as to switch on a reversing lamp and/or other reversing indicator. Alternatively, the transducer 53 can include a switch which operates to switch on the reversing indicator as the gear lever moves towards the fully home position.

In Fig.1, the linear transducer 53 occupies a position normally occupied by a reversing lamp switch of the transmission. Therefore, the present invention is readily adaptable to an existing transmission where the cam member 42 can be easily positioned on the selector shaft 34 and the normal reversing lamp switch simply replaced by a linear transducer 53. Such an arrangement avoids the need to make any modifications whatsoever to the gearbox casing which is normally a casting. Such an arrangement is most advantageous in that respect.

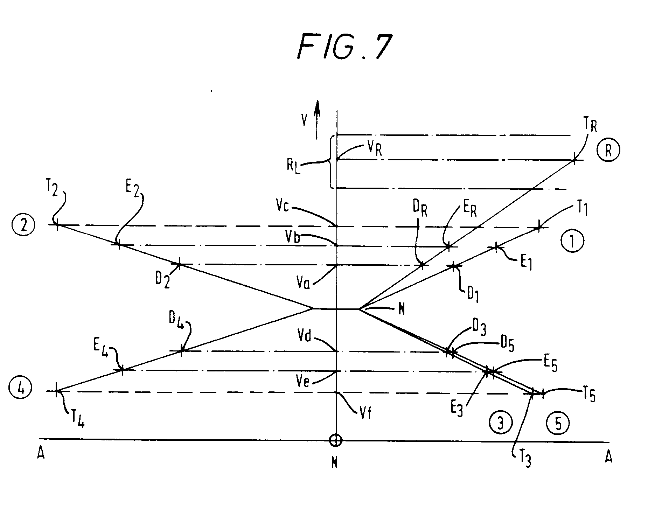

Where the casing 28 can be modified to re-position the mounting to take the linear transducer 23 as in Fig.6, the cam member (indicated at 142) can be pinned directly to the selector shaft 34 and positioned so as to travel with the selector shaft 34 over its full axial travel distance. Such an arrangement avoids the need for a spring 47 as in Fig.1 where the cam member in that figure is unable to travel downwardly for the full downward travel distance of the selector shaft. In Fig.6 the cam member is provided with a cam surface 150 for engagement with finger 54 in ratio 5. The cam surface 150 extends from one side of the path 49 such that the voltage outputs at $D_5$, $E_5$ and $T_5$ for ratio 5 will be the same as those at $D_3$, $E_3$ and $T_3$ for ratio 3. The outputs for the Fig.6 arrangement can be seen in Fig.7 and in the table below.

| RATIO REQUIRED | RATIO DISENGAGED | RATIO ENGAGED | DETENT ENGAGED | TRANSDUCER OUTPUT VOLTAGE |
|---|---|---|---|---|
| 1 | $D_1$ | | | Va |
| | | $E_1$ | | Vb |
| | | | $T_1$ | Vc |
| 2 | $D_2$ | | | Va |
| | | $E_2$ | | Vb |
| | | | $T_2$ | Vc |
| 3 | $D_3$ | | | Vd |
| | | $E_3$ | | Ve |
| | | | $T_3$ | Vf |
| 4 | $D_4$ | | | Vd |
| | | $E_4$ | | Ve |
| | | | $T_4$ | Vf |
| 5 | $D_5$ | | | Vd |
| | | $E_5$ | | Ve |
| | | | $T_5$ | Vf |
| R | $D_R$ | | | Va |
| | | $E_R$ | | Vb |
| | | | $T_R$ | Vr |

In all other respects, the arrangement shown in Fig.6 is the same as that in Fig.1.

Instead of using the selector shaft 34 to select one of a multiplicity of ratios it may be arranged to select one of two ratios as in, for example, a range change gearbox.

**Claims**

1. A gear position sensor to indicate that one of a plurality of gear ratios has been engaged in a change-speed transmission (12), the sensor (23) comprising a sensing component (53) and a co-operable com-

6

ponent (42; 142) one of which can be moved relative to the other in a first direction and a second direction transverse to the first direction into any one of a plurality of pre-determined attitudes each of which corresponds to one of the ratios, the cooperation between the components (53,42; 142) enabling the sensing component (53) to provide a signal to indicate that a particular ratio has been engaged, the co-operable component (42; 142) defining a cam-like surface (48,50,51) comprising a plurality of surface portions (48a,48b,50; 150,51a,51b) which co-operate with a part (54) of the sensing component (53); characterised in that a single sensing component (53) provides a plurality of signals corresponding to all the respective ratios by co-operation with said surface portions (48a,48b,50; 150,51a,51b) which are interconnected by a path (49) which extends in said first direction, said surface portions (48a,48b,50; 150,51a,51b) extending from the sides of said path (49) so that said part (54) of the sensing component (53) engages said path (49) when relative movement occurs between said components (53,42; 142) in the first direction whereby said single sensing component (53) is able to sense engagement of all of the gear ratios.

2. A gear position sensor according to claim 1 characterised in that the cam-like surface comprises a plurality of surface portions (48a,48b,50; 150,51a,51b) which co-operate with said part (54) of the other component (53) in the respective attitudes.

3. A gear position sensor according to Claim 2 characterised in that some of said surface portions (48a,50; 150,51a) are spaced apart in said first direction of movement.

4. A gear position sensor according to Claim 2 or 3 characterised in that some said surface portions (48a,48b) are spaced apart in said second direction.

5. A gear position sensor according to any preceding Claim characterised in that movement in the first and second directions is linear and rotary respectively.

6. A gear position sensor according to any preceding Claim characterised in that movement in the second direction is rotary, and rotary movement in opposite senses from a mean position permits cooperation between those surface portions (48a,48b) and the other component (54).

7. A gear position sensor according to any preceding Claim characterised in that the co-operable component (42; 142) is movable into said attitudes relative to the sensing component (53).

8. A gear position sensor according to any preceding Claim characterised in that the sensing component (53) occupies a position on a transmission (12) normally occupied by a reversing lamp switch.

9. A gear position sensor according to any preceding Claim characterised in that one of the engageable ratios is a reverse ratio (R) and the sensing component (53) provides an operating signal when reverse ratio is selected which is used to cause a reversing indicator to operate.

10. A gear position sensor according to Claim 9 characterised in that the operating signal which causes the reversing indicator to operate is of a level different from the levels of signals provided by the sensing component (53) when other ratios are selected.

11. A gear position sensor according to Claim 10 characterised in that the surface portion (50; 150) which co-operates with said part (54) of the other component (53) in an attitude which corresponds to reverse ratio (R) being arranged to create movement of said part (54) of the sensing component (53) which will cause the sensing component to provide said different level of signal.

12. A gear position sensor according to Claim 11 characterised in that the amount by which the said part (54) of the sensing component (53) is moved when selecting reverse ratio (R) is greater than that by which it is moved by the other of the said surface portions (48a,48b,51a,51b) when selecting other ratios (1,2,3,4,5).

13. A gear position sensor according to any preceding Claim characterised in that the movable component (42; 142) is movably mounted on a selector element (34) which moves over a given distance to select the ratios.

**14.** A gear position sensor according to Claim 13 characterised in that the movable component (42) is permitted to move with said selector element (34) for a reduced distance less than said given distance.

**15.** A gear position sensor according to Claim 14 characterised in that the selector element (34) moves relative to the movable component (42) up to said given distance after the movable component (34) has moved through said reduced distance.

**16.** A combined clutch and transmission control system including a gear position sensor according to any preceding Claim and characterised in that the sensing component (53) provides a signal which causes a releasable clutch (14) to engage after said ratio has been engaged but prior to operation of detent means in the change speed transmission (12) which maintains the engaged condition.

**17.** A system according to claim 16 or a combined clutch and transmission system including a gear position sensor according to any of Claims 1 to 15 characterised in that the sensing component (53) provides a signal which causes a releasable clutch (14) to disengage after a said ratio or the selected one of the group of ratios has been disengaged.


**Patentansprüche**

**1.** Getriebegangfühler zum Anzeigen, daß eines von einer Vielzahl von Übersetzungsverhältnissen in einem Übersetzungsgetriebe (12) eingelegt worden ist, wobei der Fühler (23) eine Fühlkomponente (53) und eine zusammenwirkende Komponente (42; 142) aufweist, von denen eine relativ zur anderen in einer ersten Richtung und einer zweiten Richtung bewegt werden kann, die quer zur ersten Richtung ist, in irgendeine von einer Vielzahl von vorbestimmten Stellungen, von denen jede einem Gang entspricht, wobei das Zusammenwirken zwischen den Komponenten (53, 42; 142) es ermöglicht, daß die Fühlkomponente (53) ein Signal liefert, um anzuzeigen, daß ein bestimmter Gang eingelegt worden ist, wobei die zusammenwirkende Komponente (42; 142) eine nockenartige Oberfläche (48, 50, 51) bestimmt, die eine Vielzahl von Oberflächenbereichen (48a, 48b, 50; 150, 51a, 51b) aufweist, die mit einem Teil (54) der Fühlkomponente (53) Zusammenwirken; dadurch gekennzeichnet, daß eine einzige Fühlkomponente (53) eine Vielzahl von allen jeweiligen Gängen entsprechenden Signalen durch Zusammenwirken mit den Oberflächenbereichen (48a, 48b, 50; 150, 51a, 51b) liefert, die durch eine Bahn (49) verbunden sind, die sich in der ersten Richtung erstreckt, wobei sich die Oberflächenbereiche (48a, 48b, 50; 150, 51a, 51b) von den Seiten der Bahn (49) erstrecken, so daß der Teil (54) der Fühlkomponente (53) mit der Bahn (49) in Eingriff gelangt, wenn eine Relativbewegung zwischen den Komponenten (53, 42; 142) in der ersten Richtung auftritt, wodurch die einzige Fühlkomponente (53) den Eingriff aller Übersetzungsverhältnisse erfassen kann.

**2.** Getriebegangfühler nach Anspruch 1, dadurch gekennzeichnet, daß die nockenartige Oberfläche eine Vielzahl von Oberflächenbereichen (48a, 48b, 50; 150, 51a, 51b) aufweist, die mit dem Teil (54) der anderen Komponente (53) in den entsprechenden Stellungen zusammenwirken.

**3.** Getriebegangfühler nach Anspruch 2, dadurch gekennzeichnet, daß einige der Oberflächenbereiche (48a, 50; 150, 51a) in der ersten Bewegungsrichtung beabstandet sind.

**4.** Getriebegangfühler nach Anspruch 2 oder 3, dadurch gekennzeichnet, daß einige der Oberflächenbereiche (48a, 48b) in der zweiten Richtung beabstandet sind.

**5.** Getriebegangfühler nach einem der vorhergehenden Ansprüche, dadurch gekennzeichnet, daß die Bewegung in der ersten und zweiten Richtung linear bzw. rotierend ist.

**6.** Getriebegangfühler nach einem der vorhergehenden Ansprüche, dadurch gekennzeichnet, daß die Bewegung in der zweiten Richtung rotierend ist und daß die Drehbewegung in entgegengesetzten Richtungen von einer Mittelposition aus das Zusammenwirken zwischen diesen Oberflächenbereichen (48a, 48b) und der anderen Komponente (54) erlaubt.

**7.** Getriebegangfühler nach einem der vorhergehenden Ansprüche, dadurch gekennzeichnet, daß die zusammenwirkende Komponente (42; 142) in die Stellungen relativ zur Fühlkomponente (53) bewegbar ist.

**8.** Getriebegangfühler nach einem der vorhergehenden Ansprüche, dadurch gekennzeichnet, daß die Fühlkomponente (53) eine Position auf einem Getriebe (12) einnimmt, die normalerweise von einem Rückfahrleuchtenschalter eingenommen wird.

**9.** Getriebegangfühler nach einem der vorhergehenden Ansprüche, dadurch gekennzeichnet, daß einer der einlegbaren Gänge ein Rückwärtsgang (R) ist und die Fühlkomponente (53) ein Betätigungssignal liefert, wenn der Rückwärtsgang ausgewählt ist, das verwendet wird, um die Betätigung einer Rückfahranzeigeeinrichtung zu bewirken.

**10.** Getriebegangfühler nach Anspruch 9, dadurch gekennzeichnet, daß das Betätigungssignal, das die Betätigung der Rückfahranzeigeeinrichtung bewirkt, einen Level hat, der unterschiedlich ist zu den Signallevels, die von der Fühlkomponente (53) geliefert werden, wenn andere Gänge ausgewählt sind.

**11.** Getriebegangfühler nach Anspruch 10, dadurch gekennzeichnet, daß der Oberflächenbereich (50; 150), der mit dem Teil (54) der anderen Komponente in einer Stellung zusammenwirkt, die dem Rückwärtsgang (R) entspricht, derart angeordnet ist, daß eine Bewegung des Teils (54) der Fühlkomponente (53) geschaffen wird, die bewirkt, daß die Fühlkomponente den unterschiedlichen Signallevel liefert.

**12.** Getriebegangfühler nach Anspruch 11, dadurch gekennzeichnet, daß der Betrag, um den das Teil (54) der Fühlkomponente (53) beim Auswählen des Rückwärtsgangs (R) bewegt wird, größer ist als derjenige, um den er von der anderen der Oberflächenbereiche (48a, 48b, 51a, 51b) beim Auswählen anderer Gänge (1, 2, 3, 4, 5) bewegt wird.

**13.** Getriebegangfühler nach einem der vorhergehenden Ansprüche, dadurch gekennzeichnet, daß die bewegbare Komponente (42; 142) bewegbar auf einem Auswahlelement (34) gehaltert ist, das sich über eine vorgegebene Distanz bewegt, um die Gänge auszuwählen.

**14.** Getriebegangfühler nach Anspruch 13, dadurch gekennzeichnet, daß die bewegbare Komponente (42) mit dem Auswählelement (34) über eine verringerte Distanz bewegbar ist, die geringer ist als die vorgegebene Distanz.

**15.** Getriebegangfühler nach Anspruch 14, dadurch gekennzeichnet, daß sich das Auswahlelement (34) relativ zur bewegbaren Komponente (42) bis zu der vorgegebenen Distanz bewegt, nachdem sich die bewegbare Komponente (34) über die verringerte Distanz bewegt hat.

**16.** Kombiniertes Kupplungs- und Getriebesteuerungssystem mit einem Getriebegangfühler nach einem der vorhergehenden Ansprüche und dadurch gekennzeichnet, daß die Fühlkomponente (53) ein Signal liefert, das eine trennbare Kupplung (14) in Eingriff treten läßt, nachdem der Gang eingelegt worden ist, jedoch vor der Betätigung einer Feststellvorrichtung im Schaltgetriebe (12), die den Eingriffszustand aufrechterhält.

**17.** System nach Anspruch 16 oder kombiniertes Kupplungs- und Getriebesystem mit einem Getriebegangfühler gemäß einem der Ansprüche 1 bis 15, dadurch gekennzeichnet, daß die Fühlkomponente (53) ein Signal liefert, das ein Trennen der lösbaren Kupplung (14) bewirkt, nachdem ein Gang oder die ausgewählte Gruppe von Gängen außer Eingriff gebracht worden ist.

**Revendications**

**1.** Détecteur de position de rapport de vitesse pour indiquer que l'un d'une pluralité de rapports de vitesse a été engagé dans une boîte-transmission de vitesse (12), le détecteur (23) comprenant un élément palpeur (53) et un élément coopérant (42,142), l'un deux peut se déplacer relativement par rapport à l'autre dans une première direction et une seconde direction transversale à la première direction dans l'une d'une pluralité de positions prédéterminées, chacune d'elles correspond à l'un des rapports, la coopération entre les éléments (53,42;142) permettant à l'élément palpeur (53) de fournir un signal pour indiquer qu'un rapport particulier a été engagé, l'élément coopérant (42;142) définissant une surface à came (48,50,51) comprenant une pluralité de portions de surface (48a,48b,50;150,51a,51b) qui coopèrent avec une partie (54) de l'élément palpeur (53); caractérisé en ce qu'un unique élément palpeur (53) fournit une pluralité de signaux correspondant à tous les rapports respectifs par coopération avec lesdites portions de surface (48a,48b,50;150,51a,51b) lesquelles sont interconnectées par une surface (49) qui s'étend dans ladite première direction ; lesdites portions de surface (48a,48b,50;150,51a,51b) s'étendant depuis les côtés de ladite surface (49) tel que ledit élément (54) de l'élément palpeur (53) engage ladite surface (49) quand un déplacement relatif survient entre lesdits éléments (53,42;142) dans une première direction par laquelle ledit unique élément palpeur (53) est capable de détecter les engagements de tous les rapports de vitesse.

2. Détecteur de position de rapport de vitesse selon la revendication 1, caractérisé en ce que la surface à came comprend une pluralité de portions de surface (48a,48b,50;150,51a,51b) qui coopèrent avec ladite partie (54) de l'autre élément (53) dans les orientations respectives.

3. Détecteur de position de rapport de vitesse selon la revendication 2, caractérisé en ce que quelques unes desdites portions de surface (48a,50;150,51a) sont disposées séparément dans ladite première direction de déplacement.

4. Détecteur de position de rapport de vitesse selon l'une des revendications 2 ou 3, caractérisé en ce que quelques unes desdites portions de surface (48a,48b) sont disposées séparément dans ladite deuxième direction.

5. Détecteur de position de rapport de vitesse selon l'une quelconque des revendications précédentes, caractérisé en ce que le déplacement dans les première et seconde directions est respectivement un déplacement linéaire et un déplacement en rotation.

6. Détecteur de position de rapport de vitesse selon l'une quelconque des revendications précédentes, caractérisé en ce que le déplacement dans la deuxième direction est un déplacement en rotation, et qu'un déplacement en rotation en sens opposé d'une position milieu permet une coopération entre les portions de surface (48a,48b) et l'autre élément (54).

7. Détecteur de position de rapport de vitesse selon l'une quelconque des revendications précédentes, caractérisé en ce que les éléments coopérants (42,142) sont déplaçables dans lesdites orientations par rapport à l'élément palpeur (53).

8. Détecteur de position de rapport de vitesse selon l'une quelconque des revendications précédentes, caractérisé en ce que l'élément palpeur (53) occupe une position sur la transmission (12) normalement occupée par l'interrupteur de lampe arrière.

9. Détecteur de position de rapport de vitesse selon l'une quelconque des revendications précédentes, caractérisé en ce que l'un des rapports de vitesse est un rapport de marche arrière (R) et l'élément palpeur (53) fournit un signal de commande lorsque le rapport de marche arrière est sélectionné, qui est utilisé pour faire fonctionner un indicateur de marche arrière.

10. Détecteur de position de rapport de vitesse selon la revendication 9, caractérisé en ce que le signal de commande qui fait fonctionner l'indicateur de marche arrière est à un niveau différent que les niveaux des signaux provenant de l'élément palpeur (53) lorsque d'autres rapports de vitesse sont sélectionnés.

11. Détecteur de position de rapport de vitesse selon la revendication 10, caractérisé en ce que la portion de surface (50;150) qui coopère avec ladite partie (54) de l'autre élément (53) dans une position qui correspond au rapport de marche arrière (R) est agencée pour créer un déplacement de ladite partie (54) de l'élément palpeur (53) qui fera que l'élément palpeur fournira ledit différent niveau de signal.

12. Détecteur de position de rapport de vitesse selon la revendication 11, caractérisé en ce que la quantité du déplacement de ladite partie (54) de l'élément palpeur (53) lorsque le rapport de marche arrière (R) est sélectionné est plus grande que celle des autres déplacements par les autres portions de surface (48a,48b,51a,51b) lorsque d'autres rapports de vitesse (1,2,3,4,5) sont sélectionnés.

13. Détecteur de position de rapport de vitesse selon l'une quelconque des revendications précédentes, caractérisé en ce que l'élément déplaçable (42,142) est monté de manière déplaçable sur un élément de sélection (34) qui se déplace sur une distance donnée pour sélectionner les rapports de vitesse.

14. Détecteur de position de rapport de vitesse selon la revendication 13, caractérisé en ce que l'élément déplaçable (42) est autorisé à se déplacer avec ledit élément de sélection (34) sur une distance réduite inférieure à la distance donnée.

15. Détecteur de position de rapport de vitesse selon la revendication 14, caractérisé en ce que l'élément de sélection (34) se déplace relativement par rapport à l'élément déplaçable (42) jusqu'à ladite distance donnée après que l'élément déplaçable s'est déplacé de ladite distance réduite.

16. Un embraye et un système de contrôle de transmission combinés comprenant un détecteur de position de rapport de vitesse selon l'une quelconque des revendications précédentes et caractérisé en ce que l'élément palpeur (53) fournit un signal qui permet à l'embrayage de s'accoupler après que ledit rapport de vitesse a été engagé mais avant l'actionnement du moyen de détente dans la boîte - transmission de vitesse (12) qui maintient la condition d'engagement.

17. Un système selon la revendication 16 ou un embrayage et un système de transmission combinés comprenant un détecteur de position de rapport de vitesse selon l'une des revendications 1 à 15, caractérisé en ce que l'élément palpeur (53) fournit un signal qui permet à l'embrayage de se désaccoupler après qu'un rapport de vitesse ou celui qui a été sélectionné du groupe de rapport de vitesse a été désengagé.

FIG.1

EP 0 513 026 B1

FIG. 2

FIG. 3

FIG. 4

EP 0 513 026 B1

# FIG.5

# FIG.6

# FIG.7